# EUROPÄISCHE PATENTSCHRIFT

(11) **EP 3 072 196 B1**
(45) Veröffentlichungstag und Bekanntmachung des Hinweises auf die Patenterteilung: **05.02.2020**
(21) Anmeldenummer: 14796739.2
(22) Anmeldetag: 05.11.2014
(51) Int. Cl.: H02G 11/00

(54) **KABELBEFESTIGUNGSVORRICHTUNG**
CABLE FASTENER DEVICE
DISPOSITIF DE FIXATION DE CÂBLE

(30) Priorität: 18.11.2013 DE 102013112703
(43) Veröffentlichungstag der Anmeldung: 28.09.2016
(73) Patentinhaber: Reichle & De-Massari AG, 8620 Wetzikon (CH)
(72) Erfinder: DI DOMENICO, Maurizio, 8306 Brüttisellen (CH); KEISER, Michael, 8610 Uster (CH)
(74) Vertreter: Daub, Thomas
(86) Internationale Anmeldenummer: PCT/EP2014/073754
(87) Internationale Veröffentlichungsnummer: WO 2015/071137

(56) Entgegenhaltungen:
- US-B1- 6 389 214
- US-B1- 6 940 018

## Beschreibung

### Stand der Technik

Die Erfindung betrifft eine Kabelbefestigungsvorrichtung nach Anspruch 1.

Aus der US 6,940,018 B1 und der US 6,389,214 B1 sind Befestigungen für Kabel bekannt, wobei zueinander drehbar gelagerte Kabelbefestiaungsinnen- und Kabelbefestigungsaußenelemente gemeinsam Kabel in Kabelumfangsrichtung umschließen.

Die Aufgabe der Erfindung besteht insbesondere darin, eine Kabelbefestigungsvorrichtung mit verbesserten Eigenschaften hinsichtlich einer hohen Flexibilität, einer einfachen Montierbarkeit von Kabeln und/oder geringer Kosten bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Kabelbefestigungsvorrichtung, zur Befestigung zumindest eines Kabels, insbesondere eines Glasfaserkabels.

Es wird vorgeschlagen, dass die Kabelbefestigungsvorrichtung zumindest ein Kabelbefestigungsinnenelement und zumindest ein Kabelbefestigungsaußenelement umfasst, die um eine Drehachse drehbar zueinander gelagert sind und die dazu vorgesehen sind, in zumindest einem Anwendungszustand das zumindest eine Kabel gemeinsam, zumindest im Wesentlichen vollständig, in eine Kabelumfangsrichtung zu umschließen. Dadurch kann eine besonders einfache Befestigung des Kabels vorgenommen werden. Ebenso kann ein besonders einfacher Austausch eines Kabels, beispielsweise bei einem Defekt, vorgenommen werden. Ferner kann die Kabelbefestigungsvorrichtung besonders leicht und intuitiv bedient werden. Unter einem "Kabelbefestigungsinnenelement" soll in diesem Zusammenhang insbesondere ein Element verstanden werden, das zur Befestigung zumindest eines Kabels vorgesehen ist und von zumindest einem weiteren Bauteil, insbesondere zumindest einem Kabelbefestigungsaußenelement, zumindest in einer Ebene, zumindest im Wesentlichen vollständig umgeben ist. Bevorzugt ist das zumindest eine Kabelbefestigungsinnenelement zumindest bereichsweise rotationssymmetrisch ausgebildet. Unter einem "Kabelbefestigungsaußenelement" soll in diesem Zusammenhang insbesondere ein Element verstanden werden, das zur Befestigung zumindest eines Kabels vorgesehen ist und zumindest ein weiteres Bauteil, insbesondere zumindest ein Kabelbefestigungsinnenelement, zumindest in einer Ebene, zumindest im Wesentlichen vollständig umgibt. Bevorzugt ist das zumindest eine Kabelbefestigungsaußenelement zumindest bereichsweise rotationssymmetrisch ausgebildet. Eine Symmetrieachse liegt bevorzugt auf der Drehachse. Bevorzugt sind das zumindest eine Kabelbefestigungsinnenelement und das zumindest eine Kabelbefestigungsaußenelement konzentrisch zueinander angeordnet. Unter "zumindest im Wesentlichen vollständig umschließen" soll in diesem Zusammenhang insbesondere um zumindest 300°, bevorzugt um zumindest 340°, besonders bevorzugt um zumindest 345° umschließen verstanden werden. Unter einer "Kabelumfangsrichtung" soll in diesem Zusammenhang insbesondere eine Umfangsrichtung eines Kabels, insbesondere eines rundlichen, langgestreckten Kabels, verstanden werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung wird vorgeschlagen, dass das zumindest eine Kabelbefestigungsaußenelement das zumindest eine Kabelbefestigungsinnenelement zumindest im Wesentlichen in eine Umfangsrichtung umschließt. Dadurch können Kabel zwischen dem Kabelbefestigungsaußenelement und dem Kabelbefestigungsinnenelement besonders betriebssicher befestigt werden. Unter einer "Umfangsrichtung" soll in diesem Zusammenhang insbesondere eine Richtung verstanden werden, die um die Drehachse, um welche das zumindest eine Kabelbefestigungsinnenelement und das zumindest eine Kabelbefestigungsaußenelement drehbar zueinander gelagert sind, herum verläuft.

Ferner wird vorgeschlagen, dass das zumindest eine Kabelbefestigungsinnenelement zumindest eine erste Kabelaufnahmebucht umfasst, die dazu vorgesehen ist, das zumindest eine Kabel teilweise aufzunehmen. Dadurch können Kabel mit einem kleinen Durchmesser, insbesondere mit einem Durchmesser von weniger als 7 mm, besonders einfach in eine Montageposition am Kabelbefestigungsinnenelement geführt werden. Die zumindest eine erste Kabelaufnahmebucht ist vorteilhaft von zumindest zwei aufeinander zulaufenden Anlagewandungen begrenzt. Bevorzugt weist die zumindest eine erste Kabelaufnahmebucht ein zumindest im Wesentlichen v-förmiges oder u-förmiges Profil auf. Weiterhin vorteilhaft ist in der zumindest einen ersten Kabelaufnahmebucht zumindest eine Kabelmantelanschlagwandung des Kabelbefestigungsinnenelements angeordnet.

Des Weiteren wird vorgeschlagen, dass das zumindest eine Kabelbefestigungsaußenelement zumindest eine Kabelmontageöffnung aufweist, welche dazu vorgesehen ist, die zumindest eine erste Kabelaufnahmebucht in zumindest einer Montagekonfiguration in eine Radialrichtung zugänglich zu machen. Dadurch kann ein besonders einfaches Einlegen eines Kabels in die zumindest eine erste Kabelaufnahmebucht erfolgen. Eine Montagezeit zur Montage eines Kabels kann somit vorteilhaft reduziert werden. Die Kabelmontageöffnung weist vorteilhaft ein schlitzförmiges Profil auf. Insbesondere öffnet die Kabelmontageöffnung das Kabelbefestigungsaußenelement, von der Drehachse ausgehend, in eine Radialrichtung. Die Radialrichtung verläuft dabei senkrecht zur Drehachse.

Mehrere Kabel können in der Kabelbefestigungsvorrichtung auf einfache Weise befestigt werden, wenn das zumindest eine Kabelbefestigungsinnenelement eine Vielzahl an Kabelaufnahmebuchten aufweist, die in Umfangsrichtung benachbart angeordnet sind. Unter einer Vielzahl sollen in diesem Zusammenhang insbesondere zumindest zwei, bevorzugt zumindest acht, besonders bevorzugt zumindest sechzehn verstanden werden. Bevorzugt weisen alle Kabelaufnahmebuchten ein gleiches Profil auf.

Das zumindest eine Kabelbefestigungsinnenelement umfasst zumindest eine Zugentlastungseinheit, die dazu vorgesehen ist, Zugkräfte des zumindest einen Kabels aufzunehmen, dadurch kann eine Funktionssicherheit des zumindest einen Kabels vorteilhaft erhöht werden. Unter einer "Zugentlastungseinheit" soll in diesem Zusammenhang insbesondere eine Einheit verstanden werden, die dazu vorgesehen ist, Zugkräfte eines Kabels zumindest teilweise aufzunehmen.

Die zumindest eine Zugentlastungseinheit weist zumindest zwei aufeinander zulaufende Hauptklemmelemente auf, die dazu vorgesehen sind, zumindest eine Kabelversteifungsfaser, insbesondere zumindest eine Kabelversteifungskevlarfaser, einzuklemmen. Dadurch kann eine besonders zuverlässige Zugkraftentlastung bereitgestellt werden. Die Hauptklemmelemente sind vorteilhaft von Wandungen und/oder Schneiden gebildet. Bevorzugt sind die Hauptklemmelemente derart angeordnet, dass die zumindest eine Kabelversteifungsfaser in einem montierten Zustand aus einer Ursprungsform verformt ist. Bevorzugt sind die Hauptklemmelemente dazu vorgesehen, zumindest eine Vielzahl an Kabelversteifungsfasern, beziehungsweise ein Kabelversteifungsfaserbündel, einzuklemmen. Vorteilhaft weist die zumindest eine Zugentlastungseinheit zumindest drei aufeinander zulaufende Hauptklemmelemente auf. Bevorzugt sind die Hauptklemmelemente in einer ersten Kabelversteifungsfaseraufnahme angeordnet. In einer zusätzlichen Ausgestaltung wird vorgeschlagen, dass die Hauptklemmelemente zumindest bereichsweise aufeinander zulaufen. Dadurch kann ein besonders einfaches Einbringen der zumindest einen Kabelversteifungsfaser zwischen die Hauptklemmelemente erfolgen.

Weist die zumindest eine Zugentlastungseinheit zumindest zwei aufeinander zulaufende Nebenklemmelemente auf, die von den zumindest zwei Hauptklemmelementen getrennt ausgebildet sind und die dazu vorgesehen sind, die zumindest eine Kabelversteifungsfaser, insbesondere die zumindest eine Kabelversteifungskevlarfaser, einzuklemmen, kann weiterhin eine besonders zuverlässige Zugkraftentlastung bereitgestellt werden. Bevorzugt sind die Nebenklemmelemente in einer zweiten Kabelversteifungsfaseraufnahme angeordnet. Vorteilhaft sind die erste Kabelversteifungsfaseraufnahme und die zweite Kabelversteifungsfaseraufnahme voneinander abgewandt.

Des Weiteren wird vorgeschlagen, dass die zumindest zwei Hauptklemmelemente und die zumindest zwei Nebenklemmelemente in Umfangsrichtung zumindest im Wesentlichen auf einer gleichen Position und in eine Axialrichtung versetzt angeordnet sind.

Umfasst die Kabelbefestigungsvorrichtung eine Rasteinheit, die dazu vorgesehen ist, das zumindest eine Kabelbefestigungsaußenelement relativ zum zumindest einen Kabelbefestigungsinnenelement in zumindest einer vorgegebenen Rastposition zu verrasten, kann ein unbeabsichtigtes Drehen des zumindest einen Kabelbefestigungsaußenelements relativ zum zumindest einen Kabelbefestigungsinnenelement vorteilhaft vermieden werden. Weiterhin vorteilhaft umfasst die Rasteinheit zumindest ein federelastisch auslenkbares Rastmittel, das am zumindest einen Kabelbefestigungsinnenelement angeordnet ist. Das Rastmittel ist vorteilhaft einstückig mit dem zumindest einen Kabelbefestigungsinnenelement ausgebildet. Vorteilhaft ist in dem Kabelbefestigungsaußenelement zumindest eine Rastausnehmung angeordnet. Besonders vorteilhaft sind in dem Kabelbefestigungsaußenelement mehrere Rastausnehmungen angeordnet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Ferner wird ein Verfahren zur Befestigung zumindest eines Kabels, insbesondere eines Glasfaserkabels nach Anspruch 9 vorgeschlagen, mit einer Kabelbefestigungsvorrichtung, welche zumindest ein Kabelbefestigungsinnenelement und zumindest ein Kabelbefestigungsaußenelement aufweist, die um eine Drehachse drehbar zueinander gelagert sind, wobei das zumindest eine Kabel durch eine Kabelmontageöffnung des Kabelbefestigungsaußenelements in eine erste Kabelaufnahmebucht des Kabelbefestigungsinnenelements geführt wird. Dadurch kann das zumindest eine Kabel besonders schnell und einfach in eine Radialrichtung in die zumindest eine erste Kabelaufnahmebucht eingeführt werden.

Weiterhin wird zumindest eine Kabelversteifungsfaser des zumindest einen Kabels an zumindest einem Hauptklemmelement an der zumindest einen ersten Kabelaufnahmebucht eingeklemmt. Dadurch kann eine besonders sichere Zugentlastung des zumindest einen Kabels erreicht werden. Bevorzugt wird die zumindest eine Kabelversteifungsfaser des zumindest einen Kabels von dem zumindest einen Hauptklemmelement an der zumindest einen ersten Kabelaufnahmebucht aus einem Ursprungszustand verformt und ist kraftschlüssig an dem zumindest einen Hauptklemmelement fixiert.

Ferner wird vorgeschlagen, dass das Kabelbefestigungsaußenelement um das Kabelbefestigungsinnenelement gedreht wird und dabei die zumindest eine erste Kabelaufnahmebucht in eine Radialrichtung verschließt. Dadurch kann eine besonders sichere Befestigung des zumindest einen Kabels zwischen dem Kabelbefestigungsaußenelement und dem Kabelbefestigungsinnenelement erreicht werden.

Des Weiteren wird vorgeschlagen, dass die zumindest eine Kabelversteifungsfaser an zumindest einem Nebenklemmelement an einer zweiten Kabelaufnahmebucht, die zur zumindest einen ersten Kabelaufnahmebucht benachbart angeordnet ist, eingeklemmt wird. Dadurch kann eine besonders belastbare Zugentlastung des zumindest einen Kabels erzielt werden.

Wird die zumindest eine Kabelversteifungsfaser an zumindest einem Nebenklemmelement an der zumindest einen ersten Kabelaufnahmebucht eingeklemmt, kann eine Zugentlastung des zumindest einen Kabels besonders schnell hergestellt werden.

Die erfindungsgemäße Kabelbefestigungsvorrichtung soll hierbei nicht auf die oben beschriebene Anwendung und Ausführungsform beschränkt sein. Insbesondere kann das erfindungsgemäße System zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Kabelbefestigungsvorrichtung in einer perspektivischen Darstellung,
- Fig. 2: die Kabelbefestigungsvorrichtung nach Figur 1 in einer Draufsicht,
- Fig. 3: eine Detailansicht einer Kabelaufnahmebucht eines Kabelbefestigungsinnenelements der Kabelbefestigungsvorrichtung,
- Fig. 4: eine Detailansicht von Hauptklemmelementen einer Zugentlastungseinheit des Kabelbefestigungsinnenelements,
- Fig. 5: eine Detailansicht von Nebenklemmelementen der Zugentlastungseinheit des Kabelbefestigungsinnenelements,
- Fig. 6: eine perspektivische Ansicht eines Kabels in der Kabelaufnahmebucht während einem ersten Montageschritt,
- Fig. 7: eine perspektivische Ansicht eines Kabels in der Kabelaufnahmebucht während einem zweiten Montageschritt,
- Fig. 8: eine perspektivische Ansicht eines Kabels in der Kabelaufnahmebucht während einem alternativen zweiten Montageschritt und
- Fig. 9: ein weiteres Ausführungsbeispiel einer erfindungsgemäßen Kabelbefestigungsvorrichtung.

### Beschreibung der Ausführungsbeispiele

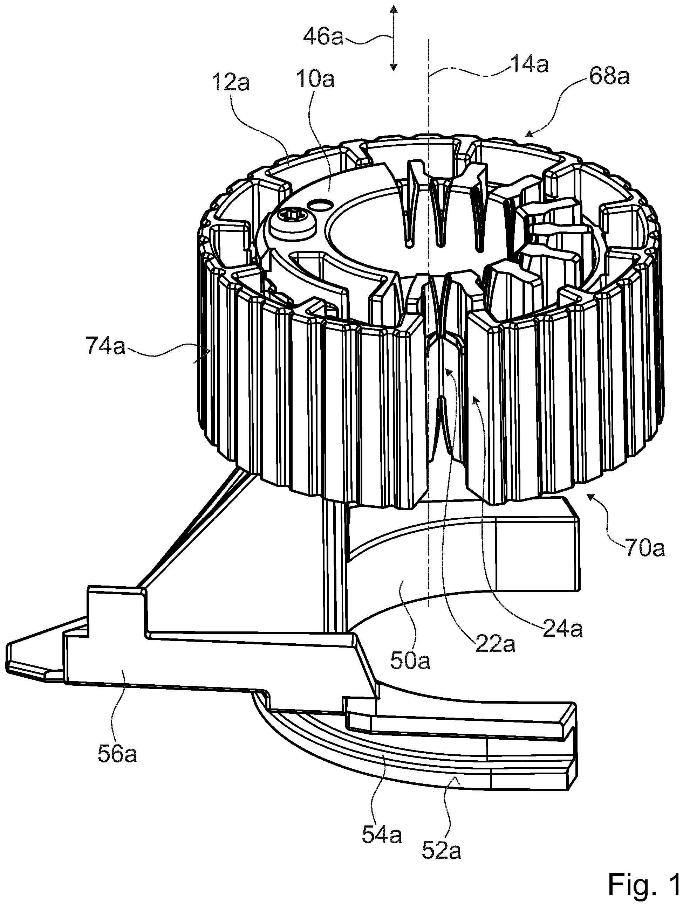

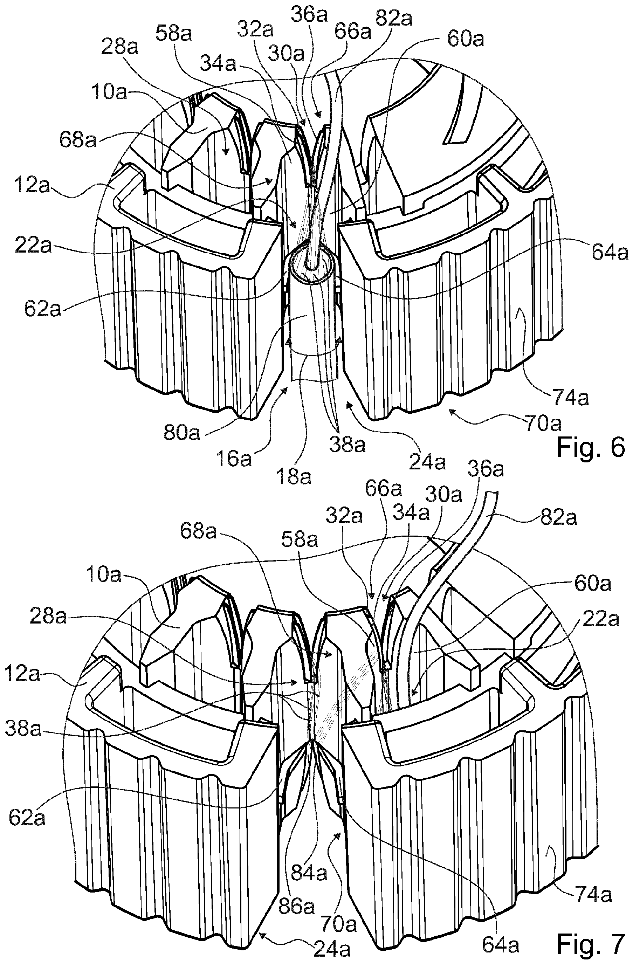

Die Figur 1 zeigt eine Kabelbefestigungsvorrichtung zur Befestigung eines Kabels 16a. Das Kabel 16a ist in den Figuren 6 bis 8 dargestellt. Das Kabel 16a ist von einem Glasfaserkabel gebildet. Das Kabel 16a weist einen Durchmesser zwischen 3 mm und 5 mm auf. Die Kabelbefestigungsvorrichtung ist dazu vorgesehen an einer Kabeldurchführungsdichteinheit eines Kabelkontaktierungswitterungsschutzes, wie beispielsweise in der DE 10 2012 112 510.4 offenbart ist, befestigt zu werden. Dazu weist die Kabelbefestigungsvorrichtung einen Befestigungssockel 50a auf. Der Befestigungssockel 50a ist bügelförmig ausgebildet. Entlang einer Außenseite 52a des Befestigungssockels 50a verläuft eine Befestigungsnut 54a, die zur Kopplung mit der Kabeldurchführungsdichteinheit vorgesehen ist. Ferner weist der Befestigungssockel 50a ein Rastelement 56a auf. Das Rastelement 56a ist dazu vorgesehen mit der Kabeldurchführungsdichteinheit bei einer Montage zu verrasten. Das Rastelement 56a ist einstückig mit dem Befestigungssockel 50a ausgebildet.

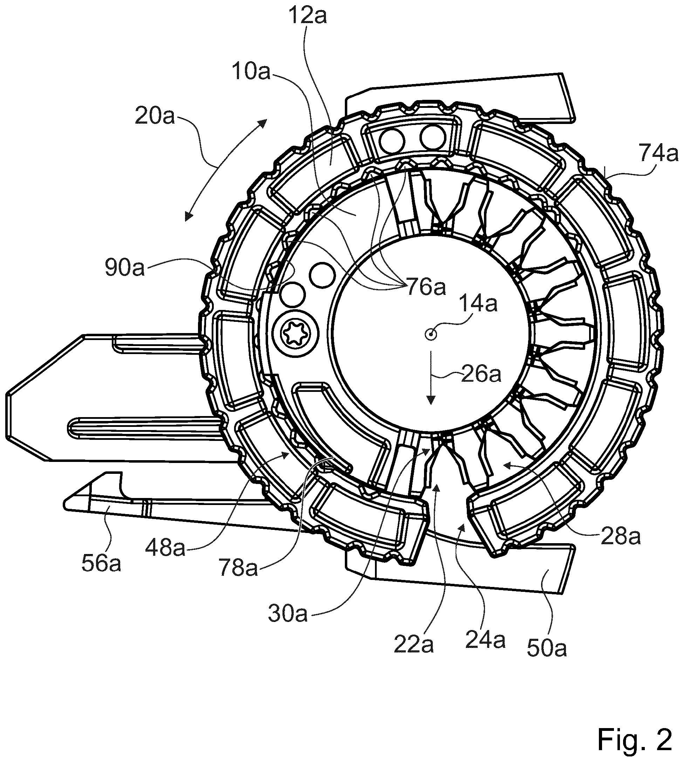

Wie in der Figur 2 näher gezeigt, umfasst die Kabelbefestigungsvorrichtung ein Kabelbefestigungsinnenelement 10a. Es ist in diesem Zusammenhang auch denkbar, dass die Kabelbefestigungsvorrichtung mehrere Kabelbefestigungsinnenelemente aufweist. Das Kabelbefestigungsinnenelement 10a ist einstückig mit dem Befestigungssockel 50a ausgebildet. Das Kabelbefestigungsinnenelement 10a ist ringförmig ausgebildet. Das Kabelbefestigungsinnenelement 10a umfasst eine erste Kabelaufnahmebucht 22a. Die erste Kabelaufnahmebucht 22a ist dazu vorgesehen, das Kabel 16a teilweise aufzunehmen. Ferner umfasst das Kabelbefestigungsinnenelement 10a eine zweite Kabelaufnahmebucht 28a. Die zweite Kabelaufnahmebucht 28a ist dazu vorgesehen, ein weiteres, nicht dargestelltes Kabel teilweise aufzunehmen.

Die erste Kabelaufnahmebucht 22a ist neben der zweiten Kabelaufnahmebucht 28a angeordnet. Anders gesagt, sind die erste Kabelaufnahmebucht 22a und die zweite Kabelaufnahmebucht 28a benachbart angeordnet. Ferner umfasst das Kabelbefestigungsinnenelement 10a sechs weitere, nicht näher bezeichnete Kabelaufnahmebuchten. Das Kabelbefestigungsinnenelement 10a weist somit eine Vielzahl an Kabelaufnahmebuchten 22a, 28a auf, die in eine Umfangsrichtung 20a benachbart angeordnet sind.

Die erste Kabelaufnahmebucht 22a und die zweite Kabelaufnahmebucht 28a sind identisch ausgebildet. Auch die weiteren sechs Kabelaufnahmebuchten sind identisch mit der ersten Kabelaufnahmebucht 22a und der zweiten Kabelaufnahmebucht 28a ausgebildet. Das Kabelbefestigungsinnenelement 10a ist hierbei bereichsweise rotationssymmetrisch ausgebildet. Die weiteren sechs Kabelaufnahmebuchten sind jeweils zur Aufnahme eines separaten Kabels vorgesehen.

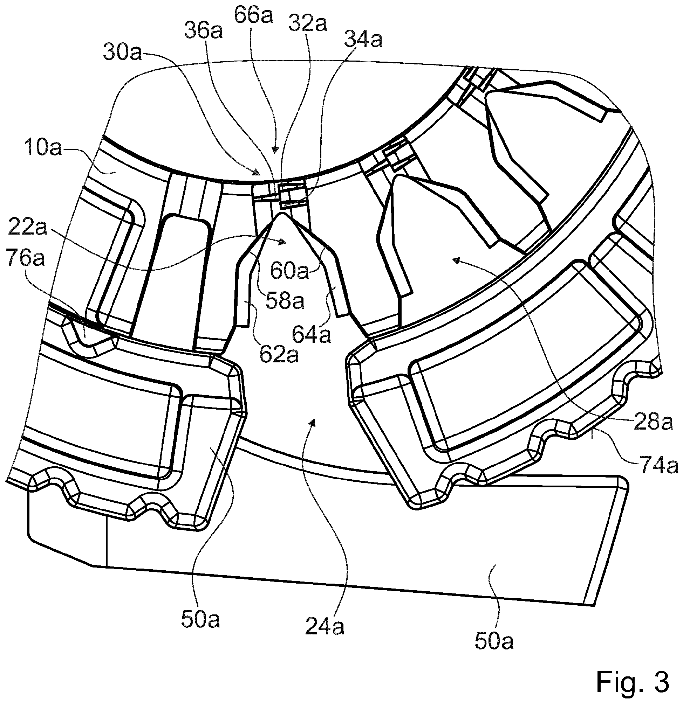

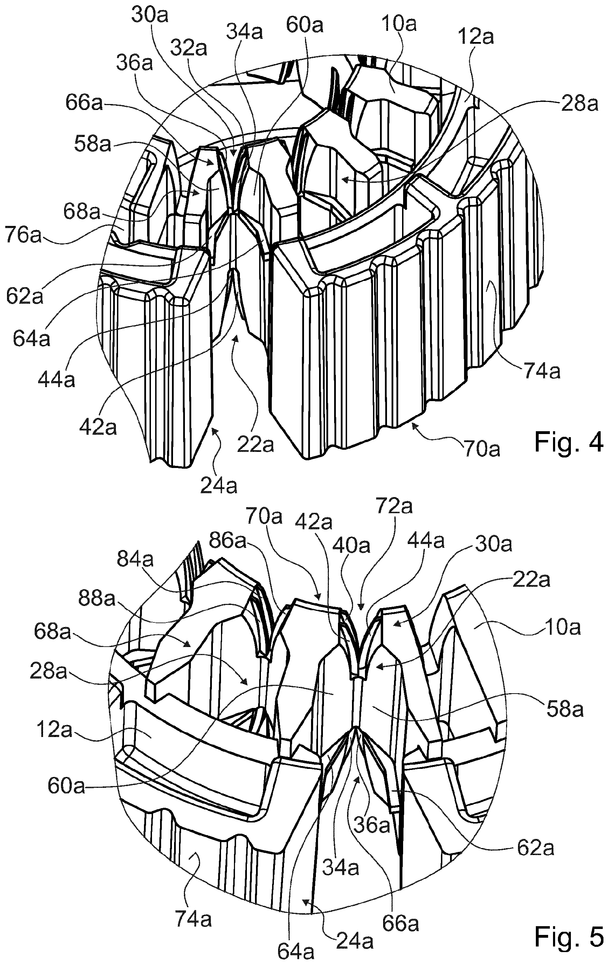

Wie in den Figuren 3 und 4 dargestellt, ist die erste Kabelaufnahmebucht 22a von einer ersten Anlagewandung 58a des Kabelbefestigungsinnenelements 10a und von einer zweiten Anlagewandung 60a des Kabelbefestigungsinnenelements 10a begrenzt. Die Anlagewandungen 58a, 60a des Kabelbefestigungsinnenelements 10a laufen aufeinander zu. Die Anlagewandungen 58a, 60a bilden ein v-förmiges Profil. In der ersten Kabelaufnahmebucht 22a sind zwei Kabelmantelanschlagwandungen 62a, 64a des Kabelbefestigungsinnenelements 10a angeordnet.

Das Kabelbefestigungsinnenelement 10a umfasst eine Zugentlastungseinheit 30a. Die Zugentlastungseinheit 30a ist dazu vorgesehen, Zugkräfte des Kabels 16a aufzunehmen. Die Zugentlastungseinheit 30a weist ein erstes Hauptklemmelement 32a, ein zweites Hauptklemmelement 34a und ein drittes Hauptklemmelement 36a auf. Die Hauptklemmelemente 32a, 34a, 36a sind schneidenförmig ausgebildet. Die Hauptklemmelemente 32a, 34a, 36a sind in einer ersten Kabelversteifungsfaseraufnahme 66a des Kabelbefestigungsinnenelements 10a angeordnet. Das erste Hauptklemmelement 32a und das dritte Hauptklemmelement 36a laufen aufeinander zu. Das zweite Hauptklemmelement 34a und das dritte Hauptklemmelement 36a laufen aufeinander zu.

Das erste Hauptklemmelement 32a und das zweite Hauptklemmelement 34a sind an der ersten Anlagewandung 58a angeordnet. Das dritte Hauptklemmelement 36a ist an der zweiten Anlagewandung 60a angeordnet. Die Hauptklemmelemente 32a, 34a, 36a sind in einer Radialrichtung 26a betrachtet hintereinander oder versetzt angeordnet. Die Hauptklemmelemente 32a, 34a, 36a sind ferner auf einer befestigungssockelabgewandten Seite 68a des Kabelbefestigungsinnenelements 10a angeordnet. Die Hauptklemmelemente 32a, 34a, 36a sind dazu vorgesehen, Kabelversteifungsfasern 38a des Kabels 16a einzuklemmen. Die Hauptklemmelemente 32a, 34a, 36a sind dabei so angeordnet, dass die Kabelversteifungsfasern 38a in einem eingeklemmten Zustand aus einer Ursprungsform verformt sind.

Wie in der Figur 5 gezeigt, weist die Zugentlastungseinheit 30a ferner drei aufeinander zulaufende Nebenklemmelemente 40a, 42a, 44a auf. Die Nebenklemmelemente 40a, 42a, 44a sind von den Hauptklemmelementen 32a, 34a, 36a getrennt ausgebildet. Die Nebenklemmelemente 40a, 42a, 44a sind dazu vorgesehen, die Kabelversteifungsfasern 38a, einzuklemmen. Die Nebenklemmelemente 40a, 42a, 44a weisen eine mit den Hauptklemmelemente 32a, 34a, 36a identische Form auf. Die Nebenklemmelemente 40a, 42a, 44a sind in einer zweiten Kabelversteifungsfaseraufnahme 72a angeordnet. Die erste Kabelversteifungsfaseraufnahme 66a und die zweite Kabelversteifungsfaseraufnahme 72a sind voneinander abgewandt. Genauer gesagt, sind die Nebenklemmelemente 40a, 42a, 44a auf einer befestigungssockelzugewandten Seite 70a angeordnet.

Die Hauptklemmelemente 32a, 34a, 36a und die Nebenklemmelemente 40a, 42a, 44a sind in Umfangsrichtung 20a auf einer gleichen Position angeordnet. In eine Axialrichtung 46a sind die Hauptklemmelemente 32a, 34a, 36a und die Nebenklemmelemente 40a, 42a, 44a versetzt angeordnet.

Wie in den Figuren 1 bis 5 ferner gezeigt, umfasst die Kabelbefestigungsvorrichtung ferner ein Kabelbefestigungsaußenelement 12a. Es ist in diesem Zusammenhang auch denkbar, dass die Kabelbefestigungsvorrichtung mehrere Kabelbefestigungsaußenelemente aufweist. Das Kabelbefestigungsaußenelement 12a und das Kabelbefestigungsinnenelement 10a sind um eine Drehachse 14a drehbar zueinander gelagert. Das Kabelbefestigungsinnenelement 10a und das Kabelbefestigungsaußenelement 12a sind dazu vorgesehen, in einem Anwendungszustand das Kabel 16a gemeinsam vollständig in eine Kabelumfangsrichtung 18a zu umschließen. Hierzu weisen das Kabelbefestigungsinnenelement 10a und das Kabelbefestigungsaußenelement 12a ein nicht näher gezeigtes Drehlager auf. Das Kabelbefestigungsaußenelement 12a ist ringförmig ausgebildet.

Eine äußere Mantelfläche 74a des Kabelbefestigungsaußenelements 12a ist geriffelt ausgebildet. Dadurch bildet die äußere Mantelfläche 74a eine erhöhte Griffigkeit. Die äußere Mantelfläche 74a bildet somit eine Bedienfläche aus. Das Kabelbefestigungsaußenelement 12a ist bereichsweise rotationssymmetrisch ausgebildet. Das Kabelbefestigungsinnenelement 10a und das Kabelbefestigungsaußenelement 12a sind konzentrisch zueinander angeordnet. Das Kabelbefestigungsaußenelement 12a umgibt das Kabelbefestigungsinnenelement 10a in Radialrichtung 26a betrachtet nahezu vollständig. Genauer gesagt, umgibt das Kabelbefestigungsaußenelement 12a das Kabelbefestigungsinnenelement 10a um 348°. Die Radialrichtung 26a verläuft senkrecht zur Drehachse 14a.

Das Kabelbefestigungsaußenelement 12a weist eine Kabelmontageöffnung 24a auf. Die Kabelmontageöffnung 24a ist dazu vorgesehen, die erste Kabelaufnahmebucht 22a in zumindest einer Montagekonfiguration in Radialrichtung 26a zugänglich zu machen. Anders ausgedrückt, öffnet die Kabelmontageöffnung 24a das Kabelbefestigungsaußenelement 12a, von der Drehachse 14a ausgehend, in Radialrichtung 26a. Durch ein Drehen des Kabelbefestigungsaußenelements 12a kann die Kabelmontageöffnung 24a eine andere Kabelaufnahmebucht in Radialrichtung 26a zugänglich machen. In jeder Montagekonfiguration ist maximal eine der Kabelaufnahmebuchten in Radialrichtung 26a zugänglich gemacht. Alle anderen Kabelaufnahmebuchten sind in Radialrichtung 26a verschlossen.

Die Kabelmontageöffnung 24a weist ein schlitzförmiges Profil auf. Die Kabelmontageöffnung 24a öffnet das Kabelbefestigungsinnenelement 10a so, dass eine zur Drehachse 14a parallel verlaufende Linie von der Drehachse 14a aus beliebig weit in Radialrichtung 26a bewegt werden kann ohne das Kabelbefestigungsaußenelement 12a schneiden zu müssen. Das Kabel 16a, welches zumindest im Wesentlichen parallel zur Drehachse 14a verläuft, kann somit durch die Kabelmontageöffnung 24a am Kabelbefestigungsaußenelement 12a vorbeibewegt werden.

Die Kabelbefestigungsvorrichtung umfasst ferner eine Rasteinheit 48a. Die Rasteinheit 48a ist dazu vorgesehen, das Kabelbefestigungsaußenelement 12a relativ zum Kabelbefestigungsinnenelement 10a in einer vorgegebenen Rastposition zu verrasten.

Die Kabelbefestigungsvorrichtung weist hierbei 19 verschiedene Rastpositionen auf. Die Rastpositionen werden durch Rastausnehmungen 76a festgelegt. Die Rastausnehmungen 76a sind in einer Innenwandung 90a des Kabelbefestigungsaußenelement 12a eingebracht. Die Rastausnehmungen 76a weisen ein kerbenförmiges Profil auf. Die Rasteinheit 48a weist ein federelastisch auslenkbares Rastmittel 78a auf. Das Rastmittel 78a ist am Kabelbefestigungsinnenelement 10a angeordnet. Das Rastmittel 78a ist einstückig mit dem Kabelbefestigungsinnenelement 10a ausgebildet. Das Rastmittel 78a ist dazu vorgesehen, in eine der Rastausnehmungen 76a einzugreifen. Ein Drehen des Kabelbefestigungsaußenelements 12a relativ zum Kabelbefestigungsinnenelement 10a ist somit mit leicht erhöhtem Kraftaufwand verbunden.

In den Figuren 6 bis 8 wird die Befestigung des Kabels 16a an der Kabelbefestigungsvorrichtung näher gezeigt. Das Kabel 16a erstreckt sich in einer Längserstreckungsrichtung zumindest im Wesentlichen parallel zur Axialrichtung 46a. Das Kabel 16a weist einen Kabelaußenmantel 80a auf. Innerhalb des Kabelaußenmantels 80a sind die Kabelversteifungsfasern 38a angeordnet. Die Kabelversteifungsfasern 38a sind von Kabelversteifungskevlarfasern gebildet. Anders ausgedrückt sind die Kabelversteifungsfasern 38a von Aramidfasern gebildet. Das Kabel 16a weist üblicherweise hunderte oder tausende Kabelversteifungsfasern 38a auf. Um eine gewisse Übersichtlichkeit zu wahren, sind nur eine geringe Anzahl an Kabelversteifungsfasern 38a in den Figuren 6 bis 8 dargestellt.

Die Kabelversteifungsfasern 38a umgeben einen Kabelinnenmantel 82a. Der Kabelinnenmantel 82a umgibt eine nicht dargestellte Glasfaser. Dabei schützt der Kabelinnenmantel 82a die Glasfaser vor Beschädigungen. Über die Glasfaser lassen sich Informationen übertragen. Der Kabelaußenmantel 80a ist an einer Stelle abgeschnitten. Ab dieser Stelle treten die Kabelversteifungsfasern 38a aus dem Kabel 16a hervor. Der Kabelinnenmantel 82a verläuft zu einem nicht näher gezeigten Kabelanschluss. Für eine Montage des Kabels 16a in der ersten Kabelaufnahmebucht 22a befindet sich die Kabelmontageöffnung 24a in Radialrichtung 26a betrachtet direkt vor der ersten Kabelaufnahmebucht 22a.

Das Kabel 16a wird in einem ersten Montageschritt durch die Kabelmontageöffnung 24a des Kabelbefestigungsaußenelements 12a in die erste Kabelaufnahmebucht 22a des Kabelbefestigungsinnenelements 10a geführt. Die Kabelversteifungsfasern 38a verlaufen hinter den Hauptklemmelementen 32a, 34a, 36a in Richtung der befestigungssockelzugewandten Seite 70a. In einem zweiten Montageschritt werden die Kabelversteifungsfasern 38a des Kabels 16a zwischen die Hauptklemmelemente 32a, 34a, 36a in der ersten Kabelaufnahmebucht 22a eingeklemmt.

Wie in der Figur 7 gezeigt, wird das Kabelbefestigungsaußenelement 12a in einem dritten Montageschritt um das Kabelbefestigungsinnenelement 10a gedreht. Genauer gesagt wird das Kabelbefestigungsaußenelement 12a um das Kabelbefestigungsinnenelement 10a um eine Rastposition weiter gedreht. Die erste Kabelaufnahmebucht 22a ist dadurch in Radialrichtung 26a verschlossen. Die Kabelmontageöffnung 24a befindet sich nun, in Radialrichtung 26a betrachtet, direkt vor der zweiten Kabelaufnahmebucht 28a. Die Kabelversteifungsfasern 38a werden zwischen Nebenklemmelemente 84a, 86a, 88a in der zweiten Kabelaufnahmebucht 28a eingeklemmt. Anschließend werden die Kabelversteifungsfasern 38a durch die Kabelmontageöffnung 24a gezogen. Das Kabelbefestigungsinnenelement 10a ist somit von den Kabelversteifungsfasern 38a einmal umwickelt. Ein weiteres, nicht dargestelltes Kabel kann nun in die zweite Kabelaufnahmebucht 28a eingelegt und wie beschrieben befestigt werden. Analog hierzu können nach und nach alle acht Kabelaufnahmebuchten mit Kabeln belegt werden.

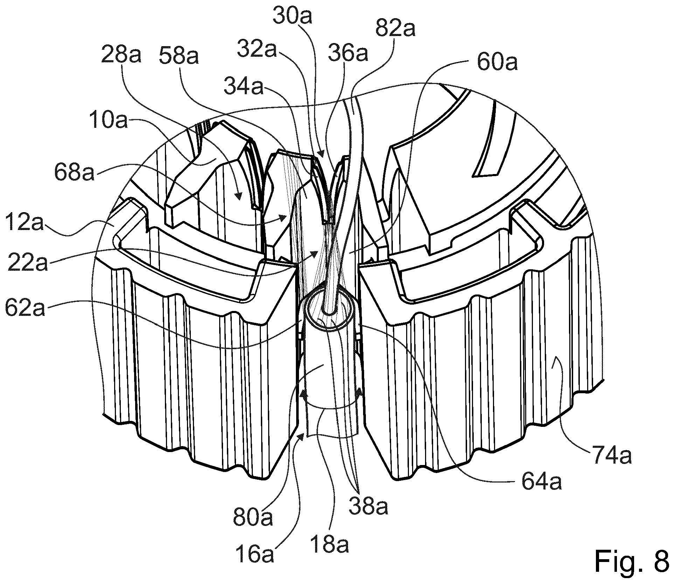

Die Figur 8 zeigt ein alternatives Verfahren zur Befestigung des Kabels 16a. Im Unterschied zum zuvor beschriebenen Verfahren wird das Kabelbefestigungsinnenelement 10a im dritten Montageschritt nicht gedreht. Stattdessen werden die Kabelversteifungsfasern 38a zwischen die Nebenklemmelemente 40a, 42a, 44a in der ersten Kabelaufnahmebucht 22a eingeklemmt. Anschließend werden die Kabelversteifungsfasern 38a nochmals durch die Kabelmontageöffnung 24a in die erste Kabelaufnahmebucht 22a gezogen. Das Kabelbefestigungsinnenelement 10a ist somit von den Kabelversteifungsfasern 38a einmal umwickelt. In einem weiteren Montageschritt wird das Kabelbefestigungsaußenelement 12a um das Kabelbefestigungsinnenelement 10a gedreht. Genauer gesagt wird das Kabelbefestigungsaußenelement 12a um das Kabelbefestigungsinnenelement 10a um eine Rastposition weiter gedreht. Die erste Kabelaufnahmebucht 22a ist dadurch in Radialrichtung 26a verschlossen. Die Kabelmontageöffnung 24a befindet sich nun, in Radialrichtung 26a betrachtet, direkt vor der zweiten Kabelaufnahmebucht 28a. Somit kann nun, analog zum gezeigten Kabel 16a, ein weiteres nicht dargestelltes Kabel in der zweiten Kabelaufnahmebucht 28a wie beschrieben befestigt werden. Analog hierzu können nach und nach alle acht Kabelaufnahmebuchten mit Kabeln belegt werden.

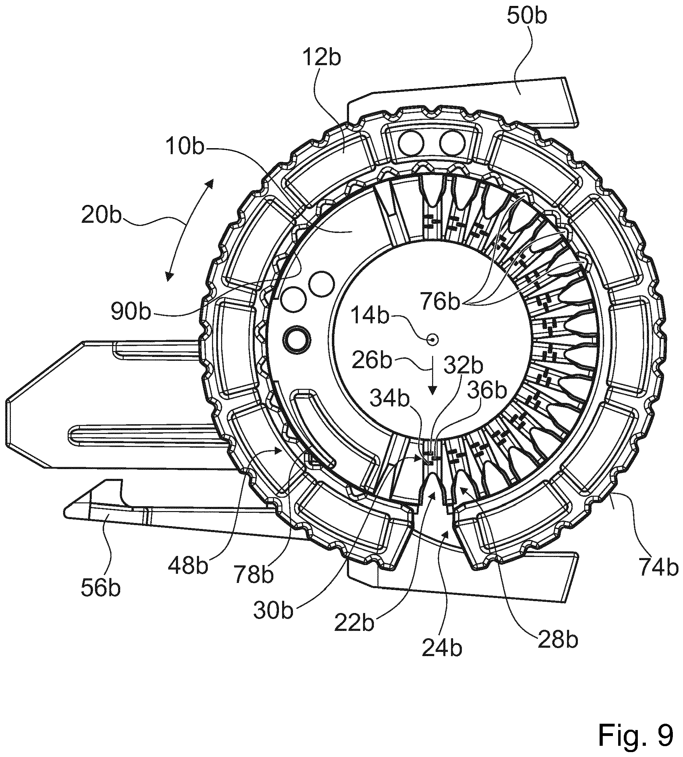

In der Figur 9 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 bis 8, verwiesen werden kann. Zur Unterscheidung der Ausführungsbeispiele ist der Buchstabe a in den Bezugszeichen des Ausführungsbeispiels in den Figuren 1 bis 8 durch den Buchstaben b in den Bezugszeichen des Ausführungsbeispiels der Figur 9 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des anderen Ausführungsbeispiels, insbesondere der Figuren 1 bis 8, verwiesen werden.

Die Figur 9 zeigt eine alternative Kabelbefestigungsvorrichtung zur Befestigung eines Kabels. Die Kabelbefestigungsvorrichtung weist ein Kabelbefestigungsinnenelement 10b und ein Kabelbefestigungsaußenelement 12b auf, die um eine Drehachse 14b drehbar zueinander gelagert sind. Das Kabelbefestigungsinnenelement 10b und das Kabelbefestigungsaußenelement 12b sind dazu vorgesehen, in einem Anwendungszustand das Kabel gemeinsam zumindest im Wesentlichen vollständig in eine Kabelumfangsrichtung zu umschließen.

Im Unterschied zum ersten Ausführungsbeispiel weist das Kabelbefestigungsinnenelement 10b in diesem Ausführungsbeispiel 16 Kabelaufnahmebuchten 22b, 28b auf. Die Kabelaufnahmebuchten 22b, 28b sind kleiner ausgebildet als im ersten Ausführungsbeispiel. Die Kabelaufnahmebuchten 22b, 28b sind dabei zur Aufnahme von Kabeln mit einem Durchmesser zwischen 2 mm und 3 mm vorgesehen. Der prinzipielle Aufbau und die Funktionsweise der Kabelbefestigungsvorrichtung entsprechen dabei derjenigen des ersten Ausführungsbeispiels. Es ist in diesem Zusammenhang auch denkbar, dass das Kabelbefestigungsinnenelement 10b eine andere, dem Fachmann als sinnvoll erscheinende Anzahl an Kabelaufnahmebuchten 22b, 28b vorsieht.

### Bezugszeichen

- 10: Kabelbefestigungsinnenelement
- 12: Kabelbefestigungsaußenelement
- 14: Drehachse
- 16: Kabel
- 18: Kabelumfangsrichtung
- 20: Umfangsrichtung
- 22: Kabelaufnahmebucht
- 24: Kabelmontageöffnung
- 26: Radialrichtung
- 28: Kabelaufnahmebucht
- 30: Zugentlastungseinheit
- 32: Hauptklemmelement
- 34: Hauptklemmelement
- 36: Hauptklemmelement
- 38: Kabelversteifungsfaser
- 40: Nebenklemmelement
- 42: Nebenklemmelement
- 44: Nebenklemmelement
- 46: Axialrichtung
- 48: Rasteinheit
- 50: Befestigungssockel
- 52: Außenseite
- 54: Befestigungsnut
- 56: Rastelement
- 58: Anlagewandung
- 60: Anlagewandung
- 62: Kabelmantelanschlagwandung
- 64: Kabelmantelanschlagwandung
- 66: Kabelversteifungsfaseraufnahme
- 68: Seite
- 70: Seite
- 72: Kabelversteifungsfaseraufnahme
- 74: Mantelfläche
- 76: Rastausnehmung
- 78: Rastmittel
- 80: Kabelaußenmantel
- 82: Kabelinnenmantel
- 84: Nebenklemmelement
- 86: Nebenklemmelement
- 88: Nebenklemmelement
- 90: Innenwandung

## Patentansprüche

1. Kabelbefestigungsvorrichtung, zur Befestigung zumindest eines Kabels (16a), insbesondere eines Glasfaserkabels, mit zumindest einem Kabelbefestigungsinnenelement (10a; 10b) und zumindest einem Kabelbefestigungsaußenelement (12a; 12b), die um eine Drehachse (14a; 14b) drehbar zueinander gelagert sind und die dazu vorgesehen sind, in zumindest einem Anwendungszustand das zumindest eine Kabel (16a) gemeinsam, zumindest im Wesentlichen vollständig, in eine Kabelumfangsrichtung (18a) zu umschließen, wobei das zumindest eine Kabelbefestigungsinnenelement (10a; 10b) zumindest eine Zugentlastungseinheit (30a; 30b) umfasst, die dazu vorgesehen ist, Zugkräfte des zumindest einen Kabels (16a) aufzunehmen, **dadurch gekennzeichnet, dass** die zumindest eine Zugentlastungseinheit (30a; 30b) zumindest zwei aufeinander zulaufende Hauptklemmelemente (32a, 34a, 36a; 32b, 34b, 36b) aufweist, die dazu vorgesehen sind, zumindest eine Kabelversteifungsfaser (38a), insbesondere zumindest eine Kabelversteifungskevlarfaser, einzuklemmen.

2. Kabelbefestigungsvorrichtung nach Anspruch 1, **dadurch gekennzeichnet, dass** das zumindest eine Kabelbefestigungsaußenelement (12a; 12b) das zumindest eine Kabelbefestigungsinnenelement (10a; 10b) zumindest im Wesentlichen in eine Umfangsrichtung (20a; 20b) umschließt.

3. Kabelbefestigungsvorrichtung nach Anspruch 1 oder 2, **dadurch gekennzeichnet, dass** das zumindest eine Kabelbefestigungsinnenelement (10a; 10b) zumindest eine erste Kabelaufnahmebucht (22a; 22b) umfasst, die dazu vorgesehen ist, das zumindest eine Kabel (16a) teilweise aufzunehmen.

4. Kabelbefestigungsvorrichtung nach Anspruch 3, **dadurch gekennzeichnet, dass** das zumindest eine Kabelbefestigungsaußenelement (12a; 12b) zumindest eine Kabelmontageöffnung (24a; 24b) aufweist, welche dazu vorgesehen ist, die zumindest eine erste Kabelaufnahmebucht (22a; 22b) in zumindest einer Montagekonfiguration in eine Radialrichtung (26a; 26b) zugänglich zu machen.

5. Kabelbefestigungsvorrichtung zumindest nach Anspruch 3, **dadurch gekennzeichnet, dass** das zumindest eine Kabelbefestigungsinnenelement (10a; 10b) eine Vielzahl an Kabelaufnahmebuchten (22a, 28a; 22b, 28b)aufweist, die in Umfangsrichtung (20a; 20b) benachbart angeordnet sind.

6. Kabelbefestigungsvorrichtung nach Anspruch 1, **dadurch gekennzeichnet, dass** die zumindest eine Zugentlastungseinheit (30a; 30b) zumindest zwei aufeinander zulaufende Nebenklemmelemente (40a, 42a, 44a) aufweist, die von den zumindest zwei Hauptklemmelementen (32a, 34a, 36a; 32b, 34b, 36b) getrennt ausgebildet sind und die dazu vorgesehen sind, die zumindest eine Kabelversteifungsfaser (38a), insbesondere die zumindest eine Kabelversteifungskevlarfaser, einzuklemmen.

7. Kabelbefestigungsvorrichtung nach Anspruch 6, **dadurch gekennzeichnet, dass** die zumindest zwei Hauptklemmelemente (32a, 34a, 36a) und die zumindest zwei Nebenklemmelemente (40a, 42a, 44a) in Umfangsrichtung (20a) zumindest im Wesentlichen auf einer gleichen Position und in eine Axialrichtung (46a) versetzt angeordnet sind.

8. Kabelbefestigungsvorrichtung nach einem der vorhergehenden Ansprüche, **gekennzeichnet durch** eine Rasteinheit (48a; 48b), die dazu vorgesehen ist, das zumindest eine Kabelbefestigungsaußenelement (12a; 12b) relativ zum zumindest einen Kabelbefestigungsinnenelement (10a; 10b) in zumindest einer vorgegebenen Rastposition zu verrasten.

9. Verfahren zur Befestigung zumindest eines Kabels (16a), insbesondere eines Glasfaserkabels, mit einer Kabelbefestigungsvorrichtung, welche zumindest ein Kabelbefestigungsinnenelement (10a; 10b), welches zumindest eine Zugentlastungseinheit (30a; 30b) umfasst, und zumindest ein Kabelbefestigungsaußenelement (12a; 12b) aufweist, die um eine Drehachse (14a; 14b) drehbar zueinander gelagert sind, insbesondere einer Kabelbefestigungsvorrichtung nach einem der vorhergehenden Ansprüche, wobei das zumindest eine Kabel (16a) durch eine Kabelmontageöffnung (24a; 24b) des Kabelbefestigungsaußenelements (12a; 12b) in eine erste Kabelaufnahmebucht (22a; 22b) des Kabelbefestigungsinnenelements (10a; 10b) geführt wird, **dadurch gekennzeichnet, dass** Kabelversteifungsfasern (38a; 38b) des Kabels (16a) an, und zwar zwischen, zwei aufeinander zulaufenden Hauptklemmelementen (32a, 34a, 36a; 32b, 34b, 36b) der Zugentlastungseinheit (30a; 30b) an der ersten Kabelaufnahmebucht (22a; 22b) eingeklemmt werden, wobei die Hauptklemmelemente (32a, 34a, 36a) in einer ersten Kabelversteifungsfaseraufnahme (66a) des Kabelbefestigungsinnenelements (10a) angeordnet sind.

10. Verfahren nach Anspruch 9, **dadurch gekennzeichnet, dass** das Kabelbefestigungsaußenelement (12a; 12b) um das Kabelbefestigungsinnenelement (10a; 10b) gedreht wird und dabei die erste Kabelaufnahmebucht (22a; 22b) in eine Radialrichtung (26a; 26b) verschließt.

11. Verfahren nach einem der Ansprüche 9 oder 10, **dadurch gekennzeichnet, dass** die zumindest eine Kabelversteifungsfaser (38a) an zumindest einem Nebenklemmelement (84a, 86a, 88a) an einer zweiten Kabelaufnahmebucht (28a), die zur ersten Kabelaufnahmebucht (22a) benachbart angeordnet ist, eingeklemmt wird.

12. Verfahren nach Anspruch 9 oder 10, **dadurch gekennzeichnet, dass** die zumindest eine Kabelversteifungsfaser (38a) an zumindest einem Nebenklemmelement (40a, 42a, 44a) an der ersten Kabelaufnahmebucht (22a), eingeklemmt wird.

## Claims

1. Cable fixation device for a fixation of at least one cable (16a), in particular an optical fibre cable, with at least one cable fixation inside element (10a; 10b) and at least one cable fixation outside element (12a; 12b), which are supported in such a way that they are rotatable around a rotation axis (14a; 14b) relative to one another and which are configured, in at least one application state, to at least substantially completely together encompass the at least one cable (16a) in a cable circumferential direction (18a),
the at least one cable fixation inside element (10a; 10b) comprising at least one tension relief unit (30a; 30b) that is configured to receive tension forces of the at least one cable (16a),
**characterised in that** the at least one tension relief unit (30a; 30b) comprises at least two main clamp elements (32a, 34a, 36a; 32b, 34b, 36b) which extend towards one another and which are configured to clamp at least one cable-stiffening fibre (38a), in particular at least one cable-stiffening Kevlar fibre.

2. Cable fixation device according to claim 1,
**characterised in that** the at least one cable fixation outside element (12a; 12b) at least substantially encompasses the at least one cable fixation inside element (10a; 10b) in a circumferential direction (20a; 20b).

3. Cable fixation device according to claim 1 or 2,
**characterised in that** the at least one cable fixation inside element (10a; 10b) comprises at least one first cable accommodation bay (22a, 22b), which is configured to partially accommodate the at least one cable (16a).

4. Cable fixation device according to claim 3,
**characterised in that** the at least one cable fixation outside element (12a; 12b) comprises at least one cable assembly opening (24a; 24b), which is configured, in at least one assembly configuration, to make the at least one first cable accommodation bay (22a; 22b) accessible in a radial direction (26a; 26b).

5. Cable fixation device at least according to claim 3,
**characterised in that** the at least one cable fixation inside element (10a; 10b) comprises a plurality of cable accommodation bays (22a, 28a; 22b, 28b), which are arranged adjacently to each other in a circumferential direction (20a; 20b).

6. Cable fixation device according to claim 1,
**characterised in that** the at least one tension relief unit (30a; 30b) comprises at least two secondary clamping elements (40a, 42a, 44a), which extend towards each other, which are configured separately from the at least two main clamping elements (32a, 34a, 36a; 32b, 34b, 36b) and which are configured to clamp the at least one cable-stiffening fibre (38a), in particular the at least one cable-stiffening Kevlar fibre.

7. Cable fixation device according to claim 6,
**characterised in that** the at least two main clamping elements (32a, 34a, 36a) and the at least two secondary clamping elements (40a, 42a, 44a) are arranged at least substantially in corresponding positions in a circumferential direction (20a) and offset in an axial direction (46a).

8. Cable fixation device according to one of the preceding claims,
**characterised by** a latching unit (48a; 48b), which is configured to latch the at least one cable fixation outside element (12a; 12b), relative to the at least one cable fixation inside element (10a; 10b), in at least one predetermined latch position.

9. Method for a fixation of at least one cable (16a), in particular an optical fibre cable, with a cable fixation device which comprises at least one cable fixation inside element (10a; 10b) having at least one tension relief unit (30a; 30b), and comprises at least one cable fixation outside element (12a; 12b), which are supported in such a way that they are rotatable around a rotation axis (14a; 14b) relative to one another, in particular a cable fixation device according to one of the preceding claims, wherein the at least one cable (16a) is guided through a cable assembly opening (24a; 24b) of the cable fixation outside element (12a; 12b) into a first cable accommodation bay (22a; 22b) of the cable fixation inside element (10a; 10b), **characterised in that** cable-stiffening fibres (38a; 38b) of the cable (16a) are clamped on the first cable accommodation bay (22a; 22b) at, in fact between, two main clamping elements (32a, 34a, 36a; 32b, 34b, 36b) of the tension relief unit (30a; 30b) which extend towards each other, the main clamping elements (32a, 34a, 36a) being arranged in a first cable-stiffening fibre accommodation (66a) of the cable fixation inside element (10a).

10. Method according to claim 9, **characterised in that** the cable fixation outside element (12a; 12b) is rotated around the cable fixation inside element (10a; 10b) and in this closes the first cable accommodation bay (22a; 22b) in a radial direction (26a; 26b).

11. Method according to one of claims 9 or 10, **characterised in that** the at least one cable-stiffening fibre (38a) is clamped on at least one secondary clamping element (84a, 86a, 88a) at a second cable accommodation bay (28a), which is arranged adjacently to the first cable accommodation bay (22a).

12. Method according to claim 9 or 10, **characterised in that** the at least one cable-stiffening fibre (38a) is clamped on at least one secondary clamping element (40a, 42a, 44a) at the first cable accommodation bay (22a).

## Revendications

1. Dispositif de fixation de câble, pour une fixation d'au moins un câble (16a), en particulier un câble à fibre optique, avec au moins un élément intérieur de fixation de câble (10a ; 10b) et au moins un élément extérieur de fixation de câble (12a ; 12b), qui sont supportés de manière rotative l'un par rapport à l'autre autour d'un axe rotatif (14a ; 14b) et qui sont configurés, en au moins un état d'application, à conjointement entourer l'au moins un câble (16a), au moins sensiblement complètement, dans une direction circonférentielle du câble (18a),
l'au moins un élément intérieur de fixation de câble (10a ; 10b) comprenant au moins une unité à soulagement de traction (30a ; 30b) configurée à recevoir des forces de traction de l'au moins un câble (16a),
**caractérisé en ce que** l'au moins une unité à soulagement de traction (30a ; 30b) comporte au moins deux éléments principaux de serrage (32a, 34a, 36a ; 32b, 34b, 36b) s'étendant l'un vers l'autre et configurés à serrer au moins une fibre raidisseur de câble (38a), en particulier au moins une fibre raidisseur Kevlar de câble.

2. Dispositif de fixation de câble selon la revendication 1,
**caractérisé en ce que** l'au moins un élément extérieur de fixation de câble (12a ; 12b) entoure l'au moins un élément intérieur de fixation de câble (10a ; 10b) au moins sensiblement dans une direction circonférentielle (20a ; 20b).

3. Dispositif de fixation de câble selon l'une quelconque des revendications 1 ou 2,
**caractérisé en ce que** l'au moins un élément intérieur de fixation de câble (10a ; 10b) comporte au moins une première baie d'accueil de câble (22a ; 22b) configurée à partiellement accueillir l'au moins un câble (16a).

4. Dispositif de fixation de câble selon la revendication 3,
**caractérisé en ce que** l'au moins un élément extérieur de fixation de câble (12a ; 12b) comporte au moins une ouverture de montage (24a ; 24b) configurée, dans au moins une configuration de montage, à permettre un accès à l'au moins une première baie d'accueil de câble (22a ; 22b) dans une direction radiale (26a ; 26b).

5. Dispositif de fixation de câble au moins selon la revendication 3,
**caractérisé en ce que** l'au moins un élément intérieur de fixation de câble (10a ; 10b) comporte une pluralité des baies d'accueil de câble (22a, 28a ; 22b, 28b), qui sont agencées voisinées dans une direction circonférentielle (20a ; 20b).

6. Dispositif de fixation de câble selon la revendication 1,
**caractérisé en ce que** l'au moins une unité à soulagement de traction (30a ; 30b) comporte au moins deux éléments secondaires de serrage (40a, 42a, 44a), qui s'étendent l'un vers l'autre, qui sont réalisés séparés des au moins deux éléments principaux de serrage (32a, 34a, 36a ; 32b, 34b, 36b) et qui sont configurés à serrer l'au moins une fibre raidisseur de câble (38a), en particulier l'au moins une fibre Kevlar raidisseur de câble.

7. Dispositif de fixation de câble selon la revendication 6,
**caractérisé en ce que** les au moins deux éléments principaux de serrage (32a, 34a, 36a) et les au moins deux éléments secondaires de serrage (40a, 42a, 44a) sont disposés au moins sensiblement dans des positions correspondantes dans une direction circonférentielle (20a) et en décalage dans une direction axiale (46a).

8. Dispositif de fixation de câble selon l'une quelconque des revendications précédentes,
**caractérisé par** une unité d'encliquetage (48a ; 48b) configurée à encliqueter l'au moins un élément extérieur de fixation de câble (12a ; 12b) par rapport à l'au moins un élément intérieur de fixation de câble (10a ; 10b) dans au moins une position d'encliquetage prédéterminée.

9. Procédé pour une fixation d'au moins un câble (16a), en particulier un câble à fibre optique, avec un dispositif de fixation de câble comprenant au moins un élément intérieur de fixation de câble (10a ; 10b) qui comporte au moins une unité à soulagement de traction (30a ; 30b), et comprenant au moins un élément extérieur de fixation de câble (12a ; 12b), qui sont supportés de manière rotative, l'un par rapport à l'autre, autour d'un axe rotatif (14a ; 14b), en particulier un dispositif de fixation de câble selon l'une quelconque des revendications précédentes,
l'au moins un câble (16a) étant guidé, au travers d'une ouverture de montage de câble (24a ; 24b) de l'élément extérieur de fixation de câble (12a ; 12b), dans une première baie d'accueil de câble (22a ; 22b) de l'élément intérieur de fixation de câble (10a ; 10b),
**caractérisé en ce que** des fibres raidisseurs de câble (38a ; 38b) du câble (16a) sont serrées à la première baie d'accueil de câble (22a ; 22b) à, en fait entre, deux éléments principaux de serrage (32a, 34a, 36a ; 32b, 34b, 36b) de l'unité à soulagement de traction (30a ; 30b), qui s'étendent l'un par rapport à l'autre,
les éléments principaux de serrage (32a, 34a, 36a) étant disposés dans un premier accueil de fibre raidisseur de câble (66a) de l'élément intérieur de fixation de câble (10a).

10. Procédé selon la revendication 9,
**caractérisé en ce qu'**en étant tourné autour de l'élément intérieur de fixation de câble (10a ; 10b), l'élément extérieur de fixation de câble (12a ; 12b), ferme la première baie d'accueil de câble (22a ; 22b) dans une direction radiale (26a ; 26b).

11. Procédé selon l'une quelconque des revendications 9 ou 10,
**caractérisé en ce que** l'au moins une fibre raidisseur de câble (38a) est serrée à au moins un élément secondaire de serrage (84a, 86a, 88a) à une deuxième baie d'accueil de câble (28a) voisinée de la première baie d'accueil de câble (22a).

12. Procédé selon l'une quelconque des revendications 9 ou 10,
**caractérisé en ce que** l'au moins une fibre raidisseur de câble (38a) est serrée à l'au moins un élément secondaire de serrage (40a, 42a, 44a) à la première baie d'accueil de câble (22a).
